# EUROPÄISCHE PATENTSCHRIFT

(11) **EP 2 188 045 B1**
(45) Veröffentlichungstag und Bekanntmachung des Hinweises auf die Patenterteilung: **10.10.2012**
(21) Anmeldenummer: 08801191.1
(22) Anmeldetag: 21.08.2008
(51) Int. Cl.: B01F 3/04, B01F 5/02, B01F 15/00, B67D 1/00, A23L 2/54, B01F 15/06

(54) **Verfahren und Vorrichtung zur portionsweisen Anreicherung und Ausgabe von Trinkwasser mit einem Gas**
Method and device for batchwise enrichment and dispensing of drinking water with a gas
Procédé et dispositif d'enrichissement par lot et de distribution par lot d'un eau potable avec un gaz

(30) Priorität: 21.08.2007 DE 102007039472
(43) Veröffentlichungstag der Anmeldung: 26.05.2010
(73) Patentinhaber: Biologic GmbH, 33129 Dellbrück (DE); Ionox Wasser-Technologie GmbH, 93083 Obertraubling (DE); Suto GmbH, 32312 Lübbecke (DE)
(72) Erfinder: SONNENREIN, Gerrit, 33102 Paderborn (DE)
(74) Vertreter: Bauer Vorberg Kayser Patentanwälte
(86) Internationale Anmeldenummer: PCT/DE2008/001368
(87) Internationale Veröffentlichungsnummer: WO 2009/024139

(56) Entgegenhaltungen:
- WO-A-02/079073
- WO-A-2007/141339
- WO-A-2008/116530
- DE-A1- 19 715 958
- DE-A1- 19 817 890
- US-A- 5 510 060
- US-A- 5 842 600

## Beschreibung

Die Erfindung betrifft ein Verfahren und eine Vorrichtung zur intermittierenden Anreicherung und Ausgabe von Trinkwasser mit Gasen, insbesondere Gasen, insbesondere CO₂ und/oder O₂ gemäß dem Oberbegriff des Patentanspruches 1 und 7.

Verfahren und Vorrichtungen zur Anreicherung von Trinkwasser mit Kohlendioxid (CO₂), auch als Karbonisierung bezeichnet, gehören seit langem zum Stand der Technik. Das Prinzip der Karbonatoren kann hierbei grundsätzlich in zwei Arten aufgeteilt werden.

Bei den professionellen und semi-professionellen Schankanlagen erfolgt die Anreicherung in einem Druckbehälter, dessen Füllstand mittels einer entsprechenden Sensorik erfasst und durch eine Hochdruckpumpe annähernd auf gleichem Niveau gehalten wird (z. B. DE 30 38 045). In einigen Fällen zirkuliert das so angereicherte Wasser mittels einer weiteren Pumpe zusätzlich über ein Kühlsystem. Nachtteilig sind bei dieser Art der Karbonisierung zur Sicherstellung eines ausreichenden Wasserniveaus im Behälter jedoch Pumpeinheiten erforderlich, welche über eine große Leistung verfügen. Derartige Hochleistungs-Pumpeneinheiten sind neben einer aufwendigen Mess-, Steuer- und Regeltechnik äußerst kostenintensiv und somit für Privathaushalte nicht geeignet.

Aus diesem Grund wurden in letzter Zeit so genannte "Inline-Karbonatoren" entwickelt, um in Privathaushalten Leitungswasser im Durchlaufverfahren mit Kohlendioxid anzureichern (siehe WO 2004/024306, WO 02/38488 A1. Ist jedoch der im jeweiligen Haushalt vorhandene Wasserleitungsdruck zu niedrig oder soll die Karbonisierung ohne festen Leistungsanschluss erfolgen, ist auch bei dieser Art der Karbonisierung eine Druckerhöhungspumpe erforderlich. Da bei dieser Art der Karbonisierung ein Fließdruck von ca. 3 bis 4 bar bei einer Durchflussmenge von 1 bis2 Liter pro Minute ausreichend ist, sind die Anforderungen im Vergleich zu den klassischen Verfahren zwar deutlich geringer, verursachen aber immer noch merkliche Zusatzkosten.

Die US 5,510,060 A beschreibt einen Karbonator mit einem Gehäuse aufweisende eine längliche Kammer mit einer spiralförmig gerillten Innenwand und einen länglichen Innenkörper, der in der Kammer angeordnet ist. Der innere Körper hat nur über einen Teil der Länge des spiralförmigen Strömungskanals eine innere Gaskammer Verlängerung, dieser Teil ist aus mikroporösen Materials, um das Kohlenstoffdioxid aus der inneren Kammer in der Flüssigkeit in dem spiralförmigen Strömungiskanal zu diffusieren.

Die US 5,842,600 A beschreibt ein Verfahren, bei dem ein kohlensäurehaltiges Getränkewasser auf Nachfrage die Ströme von Wasser und Kohlendioxid in einer Misch-Venturidüse vermischt. Stromabwärts des Venturi-Rohrs, wird das Gemisch aus Wasser und Kohlendioxid durch einen statischen Mischer vor der Ausgabe geführt.

Ausgehend vom dargelegten Stand der Technik liegt der Erfindung die Aufgabezugrunden, ein Verfahren und eine zugehörige Vorrichtung zur portionsweisen Anreicherung von Trinkwasser mit Gas, insbesondere mit CO₂ und/oder O₂ anzugeben, welches die zuvor genannten Nachteile beseitigt und eine kostengünstige und portionsweise Anreicherung und Ausgabe von kleineren Wassermengen ermöglicht und somit für die Verwendung in Privathaushalten geeignet ist.

Die Aufgabe wird durch ein Verfahren nach Anspruch 1 und eine Vorrichtung nach Anspruch 7 gelöst. Vorteilhafte Ausgestaltungen werden in den Unteransprüchen beschrieben.

Der wesentliche Aspekt des erfindungsgemäßen Verfahrens ist darin zu sehen, dass das Wasser mittels einer Kleinstpumpe, insbesondere einer elektromagnetischen Schwingkolbenpumpe mit geringer Fördermenge portionsweise einer Mischvorrichtung zugeführt wird und die für den Zapfvorgang erforderliche
re Durchflussmenge durch in die Mischvorrichtung strömendes Gas realisiert wird. Beim erfindungsgemäßen Verfahren wird somit das Trinkwasser aus einem Vorratsbehälter mittels einer Kleinstpumpe z. B. einer einfachen elektromagnetischen Schwingkolbenpumpe, deren Durchflussmenge beispielsweise auf wenige Milliliter pro Sekunde beschränkt ist, der Mischvorrichtung zugeführt. Vorteilhaft ist damit für den Fall, dass ein fester Anschluss an das Wasserleitungsnetz nicht gewünscht oder nicht möglich ist, durch das erfindungsgemäße Verfahren eine kostengünstige Erzeugung und Ausgabe von mit Gas, insbesondere mit CO2 und/oder 02 angereichertem Trinkwasser realisierbar, welche auf die Abgabe von kleineren Mengen bzw. auf eine Portionsweise Abgabe beschränkt wird. Aufgrund der niedrigen Herstellungskosten ist somit ein umfangreicher Einsatz in Privathaushalten - analog zu den vor einigen Jahren auf dem Markt erschienenen so genannten Handsprudler- zu erwarten.

Entsprechend einem wichtigen Aspekt der Erfindung wird die für den Zapfvorgang, zur raschen Befüllung eines Trinkgefäßes, erforderliche Durchflussmenge durch den ständig an der Mischvorrichtung anliegenden Gasdruck realisiert, wobei dies zu einem entsprechenden Absinken des Wasserniveaus in der Mischkammer führt, und der Niveauausgleich nach Beendigung des Zapfvorgangs durch ein Nachlaufen der Kleinstpumpe, z. B. mittels einer einfachen Zeitschaltung, wieder sichergestellt wird, wodurch vorteilhaft eine aufwendige und kostenintensive Füllstandssensorik und Füllstandssteuerung gemäß dem bisherigen Stands der Technik entfallen kann.

Die Durchflussmenge wird durch den anliegenden Gasdruck und die Auslaufgeometrie bestimmt und die Zapfmenge pro Zapfvorgang kann ebenfalls auf einfache Weise, z. B. mittels einer einfachen Zeitsteuerung, über ein Magnetventil vorgegeben werden.

In einer bevorzugten Ausführungsform ist dem Auslauf jedoch ein Durchflussmengenregler, der die Durchflussmenge unabhängig vom anliegenden Druck konstant hält, zugeordnet, wie sie heute bereits als Wassersparer in SanitärArmaturen, aber auch bereits in Magnetventilen integriert, handelsüblich erhältlich sind. Hierdurch können weitere Kosten gespart werden, da die Genauigkeit des gasseitig eingesetzten Druckminderers nun nicht mehr entscheidend für die jeweils abgegebene Portionsmenge ist. Dadurch ist es darüber hinaus aber auch möglich, den Sättigungsgrad des Wassers durch Variation des Gasdrucks zu bestimmen.

In einer bevorzugten Ausführungsform weist die Mischvorrichtung einen Düsenkörper zur Erzeugung einer möglichst hohen Phasengrenzfläche und einer sich anschließenden Mischkammer auf. Als besonders geeignet erwies sich ein Düsenringspalt und eine zentral zum Düsenringspalt angeordnete Gaseinblasdüse, da sich bei dieser Ausführung mit relativ geringem Druckverlust eine gute Zerstäubung erzielen lässt und sich an den Wänden der Mischkammer zusätzlich ein Fallfilm ausbildet.

Eine weitere bevorzugte Ausführungsform der Erfindung sieht vor, das der Mischvorrichtung eine Kühleinheit zugeordnet ist, vorzugsweise zwischen Mischvorrichtung und Auslauf, wobei sich die Herstellungskosten durch den Einsatz einer thermo-elektrischen Kühlung, wie sie z. B. in der WO 2006/034829 aufgeführt, gering halten lassen.

Weiterhin ist es vorteilhaft, dem Wasservorratsbehälter oder der Wasserleitung ein Filterelement zuzuordnen.

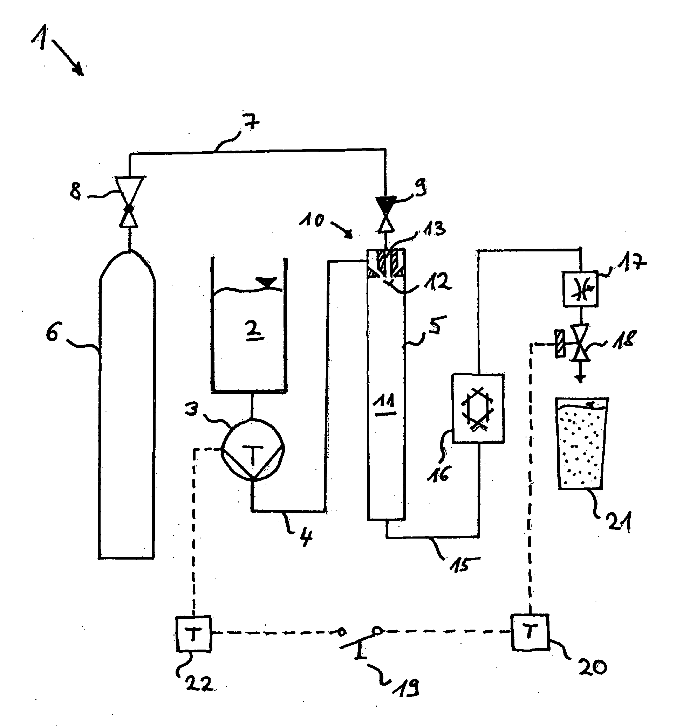

Weitere Einzelheiten und Vorteile der Erfindung können der nachfolgenden Beschreibung eines Ausführungsbeispiels anhand der beiliegenden Figur entnommen werden, welche ein vereinfachtes Blockschaltbild der erfindungsgemäßen Vorrichtung zeigt.

Die in der Figur anhand eines schematischen Blockschaltbildes beispielhaft dargestellte Vorrichtung 1 ist insbesondere für die Karbonisierung und portionsweise Ausgabe von Trinkwasser für Endverbraucher vorgesehen.

Diese umfasst einen Wasservorratstank 2 von dem aus das Trinkwasser mittels einer Kleinstpumpe 3, vorzugsweise einer elektromagnetischen Schwingkolbenpumpe oder einer vergleichbaren Kleinstpumpe über eine Wasserleitung 4 einer Mischvorrichtung 5 zugeführt wird.

Die Vorrichtung 1 weist außerdem einen Gasvorrat 6 auf, von dem eine Gasleitung 7 über einen Druckminderer 8 und einen Rückflussverhinderer 9 zur Mischvorrichtung 5 führt.

Die Mischvorrichtung 5 besteht aus einem Düsenkörper 10 und einer Mischkammer 11, wobei der Düsenkörper 10 beispielsweise wie in der WO 2004/024306 beschrieben ausgebildet ist. Er umfasst einen Düsenringspalt 12, der mit der Wasserleitung 4 in Verbindung steht, und eine zentrale Gaseinblasdüse 13, die über den Rückflussverhinderer 9 mit der Gasleitung 7 verbunden ist.

Das angereicherte Wasser verlässt die Mischkammer 11 über einen Auslass, der unmittelbar in der Zapfleitung 15 mündet. Der Zapfleitung 15 sind ein Durchflussmengenregler 17 und ein Magnetventil 18 zugeordnet, wobei das Trinkwasser ggf. vorher eine Kühlvorrichtung 16 durchläuft.

Die Steuerung der Vorrichtung 1 erfolgt über einen Schalter oder Taster 19, der mit dem Magnetventil 18 und der Kleinstpumpe 3, vorzugsweise über jeweils einen Timer bzw. Zeitschalters 20, 22 verbunden ist. Wird nun der Schalter oder Taster 19 durch den Verbraucher betätigt, wird das Magnetventil 18 in der Zapfleitung 15 geöffnet und die Schwingkolbenpumpe 3 gestartet. Das über die Gasleitung 7 zuströmende Gas drückt das angereicherte Wasser aus der Mischkammer 11 und das Wasserniveau in der Mischkammer 11 sinkt aufgrund der sehr geringen Fördermenge der Schwingkolbenpumpe 3 deutlich ab, d.h. der Druck in der Mischkammer 11 fällt auf den am Druckminderer 8 eingestellten Wert ab. Das Volumen der Mischkammer 11 entspricht hierbei mindestens der gewünschten Zapfmenge pro Zapfvorgang.

Diese Zapfmenge kann in sehr einfacher Weise durch den Timer 20 festgelegt werden, wenn durch den Einsatz des Durchflussmengenreglers 17 die Durchflussmenge jederzeit konstant ist. Soll z. B. bei jeder Betätigung des Tasters 19 ein Zapfgefäß 21 von 200 ml Inhalt gefüllt werden und es wird beispielsweise ein Durchflussmengenregler 17 mit einer Durchflussmenge von 2 Liter pro Minute verwendet, wird der Timer 20 für das Magnetventil 18 auf ca. 6 Sekunden ausgelegt. Das Volumen der Mischkammer 11 sollte in diesem Fall ebenfalls mit mindestens 200 ml bemessen werden, wobei in diesem Fall die Mischvorrichtung 5 nach Beendigung des automatischen Zapfvorgangs vollständig mit Kohlendioxid gefüllt ist.

Der Gasdruck am Druckminderer 8 ist vorzugsweise so eingestellt bzw. einstellbar, dass das nun die Mischkammer 11 ausfüllende Gas durch dem Nachlauf der Kleinstpumpe 3 wiederum vollständig gelöst werden kann, und sich hieraus eine "Gelöst-Konzentration' zwischen 4 und 6 Gramm pro Liter Wasser ergibt.

Während der Nachlaufzeit steigt der Druck in der Mischkammer 11 wiederum bis auf den maximalen Förderdruck der Pumpe 3 an, wodurch die schnelle Lösung des Gases begünstigt wird. Die erforderliche Nachlaufzeit der Kleinstpumpe 3 zur Wiederauffüllung der Mischkammer 11 kann mittels des Zeitschalters 22 realisiert werden. Nach Beendigung des Auffüllvorgangs ist die Vorrichtung wieder zapfbereit.

Die Erfindung wurde voranstehend an einem Ausführungsbeispiel beschrieben. Es versteht sich, dass zahlreiche Modifikationen sowie Abwandlungen möglich sind, ohne dass dadurch der der Erfindung zugrunde liegende Gedanke verlassen wird.

### Bezugszeichenliste

- 1: Vorrichtung
- 2: Wasservorratstank
- 3: Kleinstpumpe
- 4: Wasserleitung
- 5: Mischvorrichtung
- 6: Gasvorrat
- 7: Gasleitung
- 8: Druckminderer
- 9: Rückflussverhinderer
- 10: Düsenkörper
- 11: Mischkammer
- 12: Düsenringspalt
- 13: Gaseinblasdüse
- 15: Zapfleitung
- 16: Kühlvorrichtung
- 17: Durchflussmengenregler
- 18: Magnetventil
- 19: Taster
- 20: Timer
- 21: Zapfgefäß
- 22: Zeitschalter

## Patentansprüche

1. Verfahren zur Verwendung in Privathaushalten zur portionsweisen Anreicherung und Ausgabe von Trinkwasser mit Gas, insbesondere C02 und/oder 02, über eine Mischvorrichtung (5), der Trinkwasser und Gas zugeführt wird, **dadurch gekennzeichnet,**
a. **dass** das Trinkwasser mittels einer druckerhöhenden Kleinstpumpe (3), insbesondere einer elektromagnetischen Schwingkolbenpumpe mit geringer Fördermenge der Mischvorrichtung (5) zugeführt wird,
b. **dass** in einem Zapfvorgang das mit Gas angereicherte Trinkwasser portionsweise aus der Mischvorrichtung (5) ausgegeben wird, wobei die Mischvorrichtung (5) eine Mischkammer (11) umfasst, deren Volumen mindestens der gewünschten Zapfmenge je Zapfvorgang entspricht,
c. **dass** die Fördermenge der Kleinstpumpe (3) geringer ist als die Durchflussmenge des mit Gas angereicherten Wassers während des Zapfvorgangs, und
d. **dass** diese für den Zapfvorgang erforderliche höhere Durchflussmenge durch den ständig an der Mischvorrichtung (5) anliegenden Gasdruck des strömenden Gases realisiert wird.

2. Verfahren nach Anspruch 1, **dadurch gekennzeichnet, dass** die höhere Durchflussmenge während des Zapfvorgangs unabhängig von Schwankungen des Betriebsdrucks durch einen Durchflussmengenregler (17) weitestgehend konstant gehalten wird.

3. Verfahren nach Anspruch 2, **dadurch gekennzeichnet, dass** durch eine Zeitschaltung (20) eines für den Zapfvorgang vorgesehenen Magnetventils (18) eine konstante Zapfmenge je Zapfvorgang ausgegeben wird.

4. Verfahren nach einem der Ansprüche 1 bis 3, **dadurch gekennzeichnet, dass** nach Beendigung des Zapfvorgangs die Mischvorrichtung (5) durch ein Nachlaufen der Kleinstpumpe (3) wieder aufgefüllt wird.

5. Verfahren nach einem der Ansprüche 1 bis 4, **dadurch gekennzeichnet, dass** zur Sicherstellung eines ausreichenden Wasserniveaus in der Mischvorrichtung (5) eine Zeitschaltung (20, 22) des Magnetventils (18) und der Kleinstpumpe (3) durchgeführt wird.

6. Verfahren nach einem der Ansprüche 1 bis 5, **dadurch gekennzeichnet, dass** der Sättigungsgrad durch Veränderung des Gasdrucks über einen Druckminderer (8) einstellbar ist.

7. Vorrichtung zur Verwendung in Privathaushalten zur portionsweisen Anreicherung und Ausgabe von Trinkwasser mit Gasen, insbesondere C02 und/oder 02, mit einer Mischvorrichtung (5) mit einem Anschluss für eine Flüssigkeitszufuhr (4), einem Anschluss für eine Gaszufuhr (7) und einem Anschluss für eine Entnahmeleitung (15) zur Entnahme des angereicherten Trinkwassers in einem Zapfvorgang, **gekennzeichnet durch**
a. eine druckerhöhende Kleinstpumpe(3) in der Flüssigkeitszufuhr (4), wobei die Fördermenge der Kleinstpumpe (3) geringer ist als die Durchflussmenge des mit Gas angereicherten Wassers während des Zapfvorgangs,
b. einen Rückflussverhinderer (9) in der Gaszufuhr (7), und
c. ein Magnetventil (18) in der Entnahmeleitung (15) der Mischvorrichtung (5), und
d. eine Mischvorrichtung (5), die eine Mischkammer (11) umfasst, deren Volumen mindestens der gewünschten Zapfmenge je Zapfvorgang entspricht.

8. Vorrichtung nach Anspruch 7, **dadurch gekennzeichnet, dass** die Kleinstpumpe (3) als elektromagnetische Schwingkolbenpumpe ausgebildet ist.

9. Vorrichtung nach Anspruch 7 oder 8, **dadurch gekennzeichnet, dass** der Entnahmeleitung (15) ein Durchflussmengenregler (17) zur Konstanthaltung der Durchflussmenge zugeordnet ist.

10. Vorrichtung nach einem der Ansprüche 7 bis 9, **dadurch gekennzeichnet, dass** das Magnetventil (18) und die Kleinstpumpe (3) über Zeitschalter (20, 22) ansteuerbar sind.

11. Vorrichtung nach einem der Ansprüche 7 bis 10, **dadurch gekennzeichnet, dass** in der Gaszufuhr (7) dem Rückflussverhinderer (9) ein Druckminderer (8) vorgeschaltet ist, der zur Veränderung des Sättigungsgrads einstellbar ist.

12. Vorrichtung nach einem der Ansprüche 7 bis 11, **dadurch gekennzeichnet, dass** die Mischvorrichtung (5) einen Düsenkörper (10) zur Vergrößerung der Phasengrenzfläche und eine sich anschließende Mischkammer (11) aufweist.

13. Vorrichtung nach Anspruch 12, **dadurch gekennzeichnet, dass** der Düsenkörper (10) einen Düsenringspalt (12) und eine zentral zum Düsenringspalt (12) angeordnete Gaseinblasdüse (13) aufweist.

14. Vorrichtung nach einem der Ansprüche 7 bis 13, **dadurch gekennzeichnet, dass** die Vorrichtung (1) einen Wasservorrat (2) aufweist, der manuell und/oder über das Leitungsnetz befüllbar ist und aus dem der Mischvorrichtung (5) das Wasser mittels der Kleinstpumpe (3) über die Flüssigkeitszufuhr (4) zugeführt wird.

15. Vorrichtung nach Anspruch 14, **dadurch gekennzeichnet, dass** dem Wasservorrat (2) oder der durch eine Wasserleitung gebildeten Flüssigkeitszufuhr (4) ein Filterelement zugeordnet ist.

16. Vorrichtung nach einem der Ansprüche 7 bis 15, **dadurch gekennzeichnet, dass** der Mischvorrichtung (5) eine Kühleinheit (16) zugeordnet ist, und zwar vorzugsweise in der Entnahmeleitung (15).

## Claims

1. Method for use in private households for the batchwise enrichment and dispensing of drinking water with gas, In particular CO2 and/or O₂, through a mixing device (5) which is supplied with drinking water and gas, **characterised In that**
a. the drinking water Is supplied to the mixing device (5) by means of a pressure-increasing miniature pump (3), in particular an electromagnetic piston pump with a low supply volume,
b. the drinking water enriched with gas is dispensed batchwise from the mixing device (5) in a tapping process, the mixing device (5) comprising a mixing chamber (11) whose volume corresponds to at least the desired tapping amount per tapping process,
c. the supply volume of the miniature pump (3) is smaller than the flow volume of the water enriched with gas during the tapping process, and '
d. the higher flow volume required for the tapping process is realized by the gas pressure of the flowing gas permanently present at the mixing device (5).

2. Method according to claim 1, **characterised in that** the higher flow volume during the tapping process Is largely maintained at a constant level by means of a flow volume controller (17), independent of operating pressure fluctuations.

3. Method according to claim 2, **characterised in that** a constant tapping amount is dispensed per tapping process by means of a timer (20) of a magnet valve (18) provided for the tapping process.

4. Method according to any one of the claims 1 to 3, **characterised in that** after the termination of the tapping process, the mixing device (5) is refilled by the miniature pump (3) continuing to run.

5. Method according to any one of the claims 1 to 4, **characterised in that** the magnet valve (18) and the miniature pump (3) are controlled by a timer (20, 22) in order to ensure a sufficient water level in the mixing device (5).

6. Method according to any one of the claims 1 to 5, **characterised In that** the degree of saturation can be adjusted by changing the gas pressure through a pressure reducer(8).

7. Device for use in private households for the batchwise enrichment and dispensing of drinking water with gases, In particular CO2 and/or O2, comprising a mixing device (5) having a connection for a liquid supply line (4), a connection for a gas supply line (7) and a connection for a tapping line (15) for drawing the enriched water In a tapping process, **characterized by**
a. a pressure-increasing miniature pump (3) in the liquid supply line (4), the supply volume of the miniature pump (3) being smaller than the flow volume of the water enriched with gas during the tapping process,
b. a non-return valve (9) In the gas supply line (7), and
c. a magnet valve (18) In the tapping line (15) of the mixing device (5), and
d. a mixing device (5) comprising a mixing chamber (11) whose volume corresponds to at least the desired tapping amount per tapping process.

8. Device according to claim 7, **characterised in that** the miniature pump (3) is configured as an electromagnetic piston pump.

9. Device according to claim 7 or 8, **characterised in that** a flow volume controller (17) for keeping the flow volume constant is associated with the tapping line (15).

10. Device according to any one of the claims 7 to 9, **characterised in that** the magnet valve (18) and the miniature pump (3) can be controlled by timers (20, 22).

11. Device according to any one of the claims 7 to 10, **characterised In that** a pressure reducer (8), which can be adjusted for changing the degree of saturation, is provided in the gas supply line (7) upstream of the non-return valve (9).

12. Device according to any one of the claims 7 to 11, **characterised in that** the mixing device (5) comprises a nozzle body (10) for enlarging the phase interface area and an adjacent mixing chamber (11).

13. Device according to claim 12, **characterised in that** the nozzle body (10) comprises a nozzle ring gap (12) and a gas-Injecting nozzle (13) disposed centrally relative to the nozzle ring gap (12).

14. Device according to any one of the claims 7 to 13, **characterised in that** the device (1) comprises a water reservoir (2) that can be filled manually and/or through the line system, and from which the water is supplied to the mixing device (5) by means of the miniature pump (3) through the liquid supply line (4).

15. Device according to claim 14, **characterised in that** a filter element is associated with the water reservoir (2) or the liquid supply line (4) formed by a water line.

16. Device according to any one of the claims 7 to 15, **characterised in that** a cooling unit (16) Is associated with the mixing device (5), preferably in the tapping line (15).

## Revendications

1. Procédé destiné à être utilisé dans des ménages particuliers, pour un enrichissement et une distribution, respectivement par portions, d'eau potable avec du gaz, en particulier avec du CO₂ et/ou O₂, par le biais d'un dispositif de mélange (5) auquel sont amenés de l'eau potable et du gaz, **caractérisé par le fait**
a. **que** l'eau potable est amenée au dispositif de mélange (5) au moyen d'une micropompe (3) augmentant la pression, en particulier d'une pompe électromagnétique à piston oscillant à faible débit de refoulement,
b. **que**, dans une opération de prise, l'eau potable enrichie en gaz est délivrée par portions depuis ledit dispositif de mélange (5), le dispositif de mélange (5) comprenant une chambre de mélange (11) dont le volume correspond au moins à la quantité de prise souhaitée par opération de prise,
c. **que** le débit de refoulement de ladite micropompe (3) est inférieur au débit de l'eau enrichie en gaz, durant l'opération de prise, et
d. **que** ce débit plus important nécessaire à l'opération de prise est réalisé par la pression de gaz du gaz s'écoulant, qui est appliquée en permanence au dispositif de mélange (5).

2. Procédé selon la revendication 1, **caractérisé par le fait que** le débit plus Important durant l'opération de prise est maintenu constant dans la mesure la plus large possible par un régulateur de débit (17), indépendamment de variations de la pression de fonctionnement.

3. Procédé selon la revendication 2, **caractérisé par le fait que** grâce à une minuterie (20) d'une électrovanne (18) prévue pour l'opération de prise, une quantité constante de prise est délivrée par opération de prise.

4. Procédé selon l'une quelconque des revendications 1 à 3, **caractérisé par le fait que**, après avoir terminé l'opération de prise, ledit dispositif de mélange (5) est rempli **par le fait que** ladite micropompe (3) continue à fonctionner encore un certain temps.

5. Procédé selon l'une quelconque des revendications 1 à 4, **caractérisé par le fait que**, pour assurer un niveau d'eau suffisant à l'intérieur du dispositif de mélange (5), on réalisé une commande par minuterie (20, 22) de ladite électrovanne (18) et de ladite micropompe (3).

6. Procédé selon l'une quelconque des revendications 1 à 5, **caractérisé par le fait que** le degré de saturation peut être réglé en modifiant la pression de gaz via un réducteur de pression (8).

7. Dispositif destiné à être utilisé dans des ménages particuliers, pour un enrichissement et une distribution, respectivement par portions, d'eau potable avec des gaz, en particulier avec du CO₂ et/ou O₂, comprenant un dispositif de mélange (5) ayant un raccord pour une conduite d'amenée de liquide (4), un raccord pour une conduite d'amenée de gaz (7) et un raccord pour une conduit de prise (15) pour la prise de l'eau potable enrichie, dans une opération de prise, **caractérisé par**
a. une micropompe (3) augmentant la pression située dans ladite conduite d'amenée de liquide (4), le débit de refoulement de ladite micropompe (3) étant inférieur au débit de l'eau enrichie en gaz, durant l'opération de prise,
b. un dispositif anti-refoulement (9) situé dans ladite conduite d'amenée de gaz (7) et
c. une électrovanne (18) située dans la conduite de prise (15) du dispositif de mélange (5), et
d. un dispositif de mélange (5) qui comprend une chambre de mélange (11) dont le volume correspond au moins à la quantité de prise souhaitée par opération de prise.

8. Dispositif selon la revendication 7, **caractérisé par le fait que** ladite micropompe (3) est réalisée en tant que pompe électromagnétique à piston oscillant.

9. Dispositif selon la revendication 7 ou 8, **caractérisé par le fait qu'**à ladite conduite de prise (15) est associé un régulateur de débit (17) destiné à maintenir constant le débit.

10. Dispositif selon l'une quelconque des revendications 7 à 9, **caractérisé par le fait que** ladite électrovanne (18) et ladite micropompe (3) peuvent être commandées par des minuterles (20, 22).

11. Dispositif selon l'une quelconque des revendications 7 à 10, **caractérisé par le fait que**, dans ladite conduite d'amenée de gaz (7), un réducteur de pression (8) est placé en amont dudit dispositif anti-refoulement (9), qui peut être réglé pour modifier le degré de saturation.

12. Dispositif selon l'une quelconque des revendications 7 à 11, **caractérisé par le fait que** ledit dispositif de mélange (5) comprend un corps de buse (10) pour augmenter l'interphase ainsi qu'une chambre de mélange (11) placée à la suite.

13. Dispositif selon la revendication 12, **caractérisé par le fait que** ledit corps de buse (10) présente une fente annulaire de buse (12) ainsi qu'une buse d'insufflation de gaz (13) qui est disposée de manière centrale par rapport à ladite fente annulaire de buse (12).

14. Dispositif selon l'une quelconque des revendications 7 à 13, **caractérisé par le fait que** le dispositif (1) comprend un réservoir d'eau (2) qui peut être rempli manuellement et/ou via le réseau de conduites et à partir duquel l'eau est amenée au dispositif de mélange (5) par l'intermédiaire de ladite micropompe (3) via la conduite d'amenée de liquide (4).

15. Dispositif selon la revendication 14, **caractérisé par le fait qu'**un élément de filtration est associé audit réservoir d'eau (2) ou à la conduite d'amenée de liquide (4) formée par une conduite d'eau.

16. Dispositif selon l'une quelconque des revendications 7 à 15, **caractérisé par le fait qu'**une unité de refroidissement (16) est associée au dispositif de mélange (5), à savoir de préférence dans ladite conduite de prise (15). '
